# EUROPEAN PATENT APPLICATION

(11) **EP 4 582 959 A1**
(43) Date of publication of application: **09.07.2025**
(21) Application number: 23859053.3
(22) Date of filing: 02.08.2023
(51) Int. Cl.: G06F 12/0842

(54) **INSTRUCTION CONTROL METHOD, DATA CACHING METHOD, AND RELATED PRODUCTS**

(30) Priority: 02.09.2022 CN 202211073966
(71) Applicant: Shanghai Cambricon Information Technology Co., Ltd., China (Shanghai) Pilot Free Trade Zone Shanghai, 201306 (CN)
(72) Inventor: WANG, Bingrui, Shanghai 201306 (CN); HAN, Dong, Shanghai 201306 (CN); HAO, Yongzheng, Shanghai 201306 (CN)
(74) Representative: Huang, Liwei
(86) International application number: PCT/CN2023/110753
(87) International publication number: WO 2024/046018

(57) **Abstract**

This disclosure discloses an instruction control method, instruction control apparatus, processor, chip, and board card. The processor can be included as a computing apparatus in a combination processing apparatus, which may also include interface devices and other processing apparatus. The computing apparatus interacts with other processing apparatuses to jointly complete computing operations specified by the user. The combined processing apparatus may also include a storage apparatus, which is connected to the computing apparatus and other processing apparatuses respectively, for storing data of the computing apparatus and other processing apparatuses. The disclosed solution provides an instruction control method that can enhance instruction level parallelism and improve processing efficiency.

## Description

### CROSS REFERENCE TO RELATED APPLICATION

The present application claims priority to Chinese Patent Application No. 202211073966.9 with the title of "Instruction control method, data caching method and related products" filed on September 02, 2022.

### TECHNICAL FIELD

The present disclosure relates generally to the field of processors. More particularly, the present disclosure relates to an instruction control apparatus, a data cache, an instruction control method, a data caching method, a processor, a chip, and a board card.

### BACKGROUND

With the development of computer technology, the computing power of processors continues to improve, such as the increase in processing frequency and the increase in the number of processor cores. However, the speed of memory has not improved much, resulting in the inability to feed the "hungry" processors. The access and storage of data has become a bottleneck in improving processing efficiency.

For data memory access instructions, when an address dependency relationship exists between them, it is necessary to wait for the previous memory access instructions to complete and release the dependency relationship before execution, which further limits the data supply speed.

In view of this, there is an urgent need for a method that can improve the efficiency of data memory access instruction execution, thereby increasing data supply speed to meet the high-speed computing power requirements of processors.

### SUMMARY

To address at least one or more of the technical problems mentioned above, the disclosure proposes a memory access instruction control solution in various aspects.

In a first aspect, the present disclosure provides an instruction control apparatus, including: an instruction decoder configured to decode a memory access instruction, where the memory access instruction is configured to read data from a source end storage circuit and write the data into a destination end storage circuit; an instruction cache unit configured to cache the decoded memory access instruction; and an instruction transmission controller configured to transmit in advance the memory access instruction in the instruction cache unit to read the data from the source end storage circuit and cache the data to a data cache in response to existence of only dependency on the destination end storage circuit between the memory access instruction and a preceding instruction, and send a blocking signal which blocks the data read by the memory access instruction to the data cache.

In a second aspect, the present disclosure provides a data cache configured to: cache data read by a memory access instruction; and in response to receiving a blocking signal to block the data read by the memory access instruction, block the data read by the memory access instruction in the data cache.

In a third aspect, the disclosure provides a processor including the instruction control apparatus of the preceding first aspect and/or the data cache of the preceding second aspect.

In a fourth aspect, the disclosure provides a chip including the processor of the preceding third aspect.

In a fifth aspect, the disclosure provides a board card including the chip of the preceding fourth aspect.

In a sixth aspect, the present disclosure provides a memory access instruction control method, including: decoding a memory access instruction, where the memory access instruction is configured to read data from a source end storage circuit and write the data into a destination end storage circuit; in response to existence of only dependency on the destination end storage circuit between the memory access instruction and a preceding instruction, transmitting in advance the memory access instruction to read the data from the source end storage circuit and cache the data to a data cache; and sending a blocking signal which blocks the data read by the memory access instruction to the data cache.

In a seventh aspect, the present disclosure provides a data caching method, including: caching, in a data cache, data read by a memory access instruction; and in response to receiving a blocking signal to block the data read by the memory access instruction, blocking the data read by the memory access instruction in the data cache.

Through the instruction control apparatus, the data cache, the memory access instruction control method, the data cache method, the processor, the chip and the board card provided above, the disclosed embodiment provides a solution for processing memory access instructions as early as possible, allowing data reading to be executed in advance when only dependency on the destination end storage circuit exists, and then writing the read data to the destination end storage circuit when the dependency on the destination end storage circuit is released. As a result, read operation in the memory access instruction can be executed in advance, and write operation can be executed at an appropriate time, thereby hiding the memory access delay and maximizing the execution speed of the memory access instruction to quickly supply the data to the processor.

### DRAWINGS

By reading the following detailed description with reference to the accompanying drawings, the above-mentioned and other objects, features and technical effects of the exemplary embodiments of the present disclosure will become easier to understand. In the accompanying drawings, several embodiments of the present disclosure are shown in an exemplary but not restrictive manner, and the same or corresponding reference numerals indicate the same or corresponding parts of the embodiments.
FIG. 1 illustrates a diagram of a structure of a board card according to an embodiment of the present disclosure;
FIG. 2 illustrates a diagram of a structure of a combined processing apparatus according to an embodiment of the present disclosure;
FIG. 3 illustrates a schematic diagram of an internal structure of a processor core in a single-core computing apparatus according to an embodiment of the present disclosure;
FIG. 4 illustrates a simplified schematic diagram of an internal structure of a multi-core computing apparatus according to an embodiment of the present disclosure;
FIG.5 illustrates a diagram of an exemplary internal structure of an instruction control system implementing an instruction control solution according to some embodiments of the present disclosure;
FIG. 6 illustrates an exemplary flowchart of an instruction control method according to an embodiment of the present disclosure;
FIG. 7 illustrates another exemplary flowchart of an instruction control method according to an embodiment of the present disclosure.

### Detailed Description

Technical solutions in embodiments of the present disclosure will be described clearly and completely hereinafter with reference to the drawings in the embodiments of the present disclosure. Obviously, the embodiments to be described are merely some rather than all examples of the present disclosure. All other embodiments obtained by those skilled in the art based on the embodiments of the present disclosure without creative efforts shall fall within the protection scope of the present disclosure.

It should be understood that terms such as "first", "second", "third", and "fourth" and the like appear in the claims, the specification, and drawings of the present disclosure are used for distinguishing different objects rather than describing a specific order. The terms "including" and "comprising" used in the specification and the claims of the present disclosure indicate the presence of a feature, an entity, a step, an operation, an element, and/or a component, but do not exclude existence or addition of one or more other features, entities, steps, operations, elements, components, and/or collections thereof.

It should also be understood that the terms used in the specification of the present disclosure are merely intended to describe specific embodiments rather than to limit the present disclosure. As being used in the specification and the claims of the disclosure, unless the context clearly indicates otherwise, the singular forms "a", "an", and "the" are intended to include the plural forms. It should also be understood that the term "and/or" used in the specification and the claims of the present disclosure refers to any and all possible combinations of one or more of relevant listed items and includes these combinations.

As being used in this specification and the claims, the term "if" can be interpreted as "when", or "once" or "in response to a determination" or "in response to a detection" depending on the context. Similarly, the phrases "if it is determined" or "if [described condition or event] is detected" may be interpreted to mean "upon determination" or "in response to determination" or "upon detection of [described condition or event]" or "in response to detection of [described condition or event]," depending on the context.

Detailed embodiments of the present disclosure are described below in detail with reference to the accompanying drawings.

### Exemplary Hardware Environment

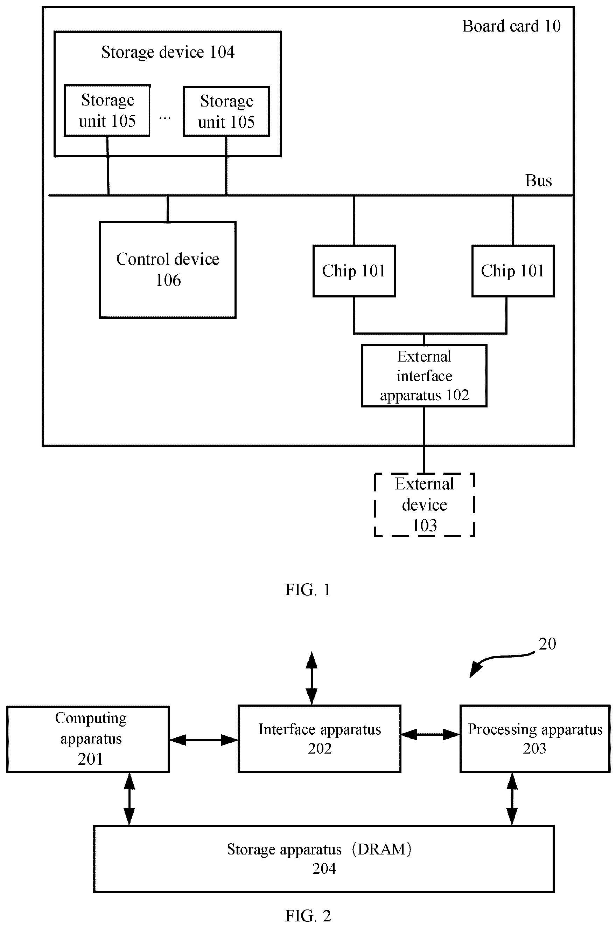

FIG. 1 illustrates a schematic diagram of a structure of a board card 10 according to an embodiment of the present disclosure. As shown in FIG. 1, the board card 10 includes a chip101, which is a system-on-chip, or also known as System on Chip (SoC), integrating one or more combined processing apparatuses. The combined processing apparatus is an artificial intelligence operation unit used to support various deep learning and machine learning algorithms to meet the intelligent processing needs in complex scenarios in the fields of computer vision, speech, natural language processing, data mining, and so on. In particular, deep learning technologies are widely applied in the field of cloud intelligence. A prominent feature of the cloud intelligence application is that the amount of input data is large, which has a high requirement on a storage capability and a computing capability of a platform. A board card 10 in this embodiment is applicable to a cloud intelligence application, and has a huge off-chip storage, an on-chip storage, and a powerful computing capability.

The chip 101 is connected to an external device 103 via an external interface apparatus 102. The external device 103 is, for example, a server, a computer, a camera, a display, a mouse, a keyboard, a network card, or a WIFI interface. Data to be processed can be transmitted from the external device 103 to the chip 101 via the external interface apparatus 102. Computation results of the chip 101 can be transmitted back to the external device 103 via the external interface apparatus 102. According to different application scenarios, the external interface apparatus 102 may have different interface forms, for example, a Peripheral Component Interconnect Express (PCIe) interface and so on.

The board card 10 also includes a storage device 104 for storing data, which includes one or more storage units 105. The storage device 104 is connected to the control device 106 and the chip 101 through a bus for data transmission. The control device 106 in the board card 10 is configured to regulate and control the state of the chip 101. To this end, in an application scenario, the control device 106 may include a single chip microcomputer, also known as a Micro Controller Unit (MCU).

FIG. 2 illustrates a diagram of a structure of a combined processing apparatus in the chip 101 of this embodiment. As shown in FIG. 2, the combined processing apparatus 20 includes a computing apparatus 201, an interface apparatus 202, a processing apparatus 203, and a storage apparatus 204.

The computing apparatus 201 is configured to execute an operation specified by a user, and is mainly implemented as a single-core intelligent processor or a multi-core intelligent processor, and is configured to execute depth learning or computation of machine learning. The computing apparatus 201 may interact with the processing apparatus 203 through the interface apparatus 202, to jointly complete the operation specified by the user.

The interface apparatus 202 is configured to transfer data and control instructions between the computing apparatus 201 and the processing apparatus 203. For example, the computing apparatus 201 may obtain input data from the processing apparatus 203 via the interface apparatus 202 and write the data into the storage apparatus on the chip of computing apparatus 201. Further, the computing apparatus 201 may obtain control instructions from the processing apparatus 203 via the interface apparatus 202 and write to a control cache on the chip of computing apparatus 201. Alternatively or optionally, the interface apparatus 202 may also read data in a memory apparatus of the computing apparatus 201 and transmit the data to the processing apparatus 203.

As a general-purpose processing apparatus, the processing apparatus 203 executes basic controls including, but not limited to, data transfer, turning on and/or stopping of the computing apparatus 201 and the like. According to different implementations, the processing apparatus 203 may be a central processing unit (CPU) or a graphics processing unit (GPU) or one or more types of processors in other general-purpose and/or special-purpose processors. These processors include, but not limited to, a digital signal processor (DSP), an application specific integrated circuit (ASIC), a field-programmable gate array (FPGA) or another programmable logic device, a discrete gate or transistor logic device, a discrete hardware component, or the like. Furthermore, the number may be determined according to actual requirements. As mentioned above, only with respect to the computing apparatus 201 of the present disclosure, it may be viewed as having a single-core structure or a homogeneous multi-core structure. However, when the computing apparatus 201 and the processing apparatus 203 are considered together, they are considered to form a heterogeneous multi-core structure.
The storage apparatus 204 is configured to store data to be processed, which may be a dynamic random access memory (DRAM) and a double data rate (DDR) memory, and generally has a size of 16G or larger, and is configured to save data of the computing apparatus 201 and/or the processing apparatus 203.

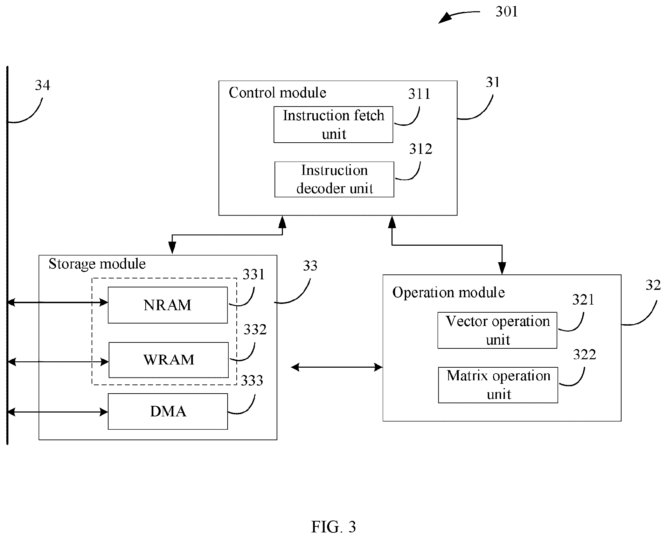

FIG. 3 shows a schematic diagram of an internal structure of a processing core when the computing apparatus 201 in FIG. 2 is a single-core computing device. The computing apparatus 301 is used for processing input data such as computer vision, voice, natural language, data mining and the like. The computing apparatus 301 includes three modules: a control module 31 (also referred to as a controller), an operation module 32 (also referred to as an operator), and a storage module 33 (also referred to as a memory).

The control module 31 is configured to coordinate and control the work of the operation module 32 and the storage module 33 to complete a task of depth learning, and the control module 31 includes an instruction fetch unit (IFU) 311 and an instruction decoder unit (IDU) 312. The instruction fetch unit 311 is configured to fetch instructions from the processing apparatus 203, and the instruction decoding unit 312 decodes the fetched instructions and sends decoding results as control information to the operation module 32 and the storage module 33.

The operation module 32 includes a vector operation unit 321 and a matrix operation unit 322. The vector operation unit 321 is configured to perform vector operations and may support complex operations such as vector multiplication, addition, nonlinear transformation and so on; the matrix operation unit 322 is responsible for the core computations of the deep learning algorithm, for example, matrix multiplication and convolution.

The storage module 33 is configured to store or transfer related data, and includes a neuron RAM (NRAM) 331, a weight RAM (WRAM) 332, and a direct memory access unit (DMA) 333. The NRAM 331 is configured to store input neurons, output neurons and intermediate results after computation; the WRAM 332 is configured to store a convolution kernel of the deep learning network, which is a weight; the DMA 333 is connected to a DRAM 204 through a bus 34 and is responsible for data transfer between the computing apparatus 301 and the DRAM 204. It should be noted that, the NRAM and the WRAM herein may be two storage areas formed by dividing a same memory on a logical storage space, and may also be two independent memories, which is not specifically limited herein.

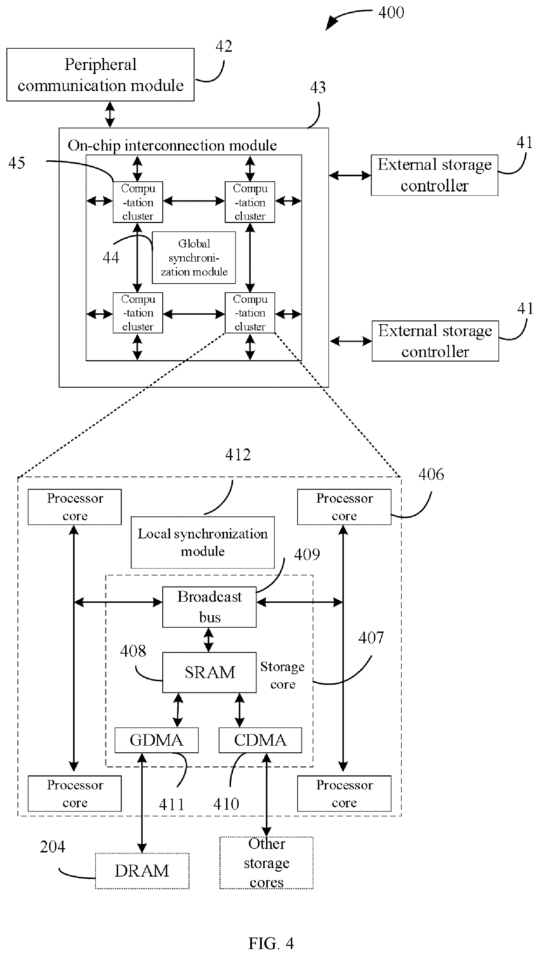

FIG. 4 illustrates a simplified schematic diagram of an internal structure when the computing apparatus 201 in FIG. 2 is a multi-core computing apparatus. The multi-core computing apparatus may be abstracted using a hierarchical hardware model. As shown in the figure, the multi-core computing apparatus 400, as a system on chip, includes at least one computing cluster, and each computing cluster includes a plurality of processor cores; in other words, the multi-core computing apparatus 400 is composed of system on chip-computing cluster-processor cores in layers.

From the perspective of a system-on-chip hierarchy, as shown, the multi-core computing apparatus 400 includes an external storage controller 41, a peripheral communication module 42, an on-chip interconnection module 43, a global synchronization module 44, and a plurality of computation clusters 45.

There may be a plurality of external storage controllers 41, two of which are exemplarily shown in the figure, and are configured to access an external storage device (for example, the DRAM 204 in FIG. 2) in response to an access request sent by a processor core, so as to read data from an off-chip or write data into the storage device. The peripheral communication module 42 is configured to receive a control signal from the processing apparatus (203 in FIG. 2) through the interface apparatus (202 in FIG. 2), and start the computing apparatus (201 in FIG. 2) to execute a task. The on-chip interconnection module 43 connects the external memory controller 41, the peripheral communication module 42 and the plurality of computation clusters 45 to transmit data and control signals among the modules. The global synchronization module 44 is, for example, a global barrier controller (GBC), and is configured to coordinate the work progress of each computation cluster to ensure information synchronization. The plurality of computation clusters 45 are the computational cores of the multi-core computing apparatus 400. Four computation clusters on each die are exemplarily illustrated in the figure. With the development of hardware, the multi-core computing apparatus 400 of the present disclosure may also include eight, sixteen, sixty-four, or even more computation clusters 45. The computation clusters 45 are configured to efficiently execute the depth learning algorithm.

From the perspective of computation clusters hierarchy, as shown in the figure, each computation cluster 45 includes a plurality of processor cores 406 as control and computation units, and a shared storage core 407 as a storage unit. Further, each computation cluster may further include a local synchronization module 412, which is configured to coordinate the work progress of each processor core in the computation cluster, to ensure the synchronization of information. Processor core 406 is illustrated exemplarily in the figure as four, and the present disclosure does not limit the number of the processor cores 406.

The storage core 407 is configured primarily to store and communicate, in other words, to store shared data or intermediate results among the processor cores 406, as well as to perform communications between the computing cluster 45 and the DRAM 204, communications among the computing clusters 45 to each other, communications among the processor cores 406 to each other, and so forth. In other embodiments, the storage core 407 has the capability of scalar operations to perform scalar operations.

The storage core 407 includes a shared memory (SMEM) 408, a broadcast bus 409, a cluster direct memory access unit (CDMA) 410, and a global direct memory access unit (GDMA) 411. SMEM 408 plays the role of a high-performance data relay station. The data reused between different processor cores 406 within the same computing cluster 45 does not need to be obtained from DRAM 204 by each processor core 406, but is relayed between processor cores 406 through SMEM 408. Storage core 407 only needs to quickly distribute the reused data from SMEM 408 to multiple processor cores 406 to improve inter core communication efficiency and greatly reduce on-chip and off chip input/output access. The broadcast bus 409, CDMA 410, and GDMA 411 are respectively used to perform communication between processor cores 406, communication between computing clusters 45, and data transmission between computing clusters 45 and DRAM 204.

From the perspective of processor core hierarchy, the structure of a single processor core may be similar to the diagram of the structure of a single core computing apparatus shown in FIG. 3, which will not be described in detail here.

### Instruction Control Solution

As mentioned in the foregoing, when an address dependency relationship exists between data memory access instructions, it is required to wait for a preceding memory access instruction to be completed, and a subsequent access instruction can be executed only after the dependency relationship is released, thereby increasing a memory access delay.

In view of this, embodiments of the present disclosure provide an instruction control solution, which divides execution of a data memory access instruction (also referred to as a data transfer-type instruction) into read operation and write operation of data. If only dependency on the destination end storage circuit exists, the read operation of the data is allowed to be performed in advance, and if the dependency on the destination end storage circuit is released, then writing the read data into the destination end storage circuit, in other words, executing the write operation. Thus, by executing the read operation in a memory access instruction in advance and executing the write operation at an appropriate time, memory access delay may be hidden, and the execution speed of the memory access instruction is improved as far as possible, thereby facilitating more rapid supply of data to a processor. The data memory access instruction may include, but is not limited to, an instruction such as Load, Store, Move and so on to transfer data from one storage location (the source end storage circuit) to another storage location (the destination end storage circuit).

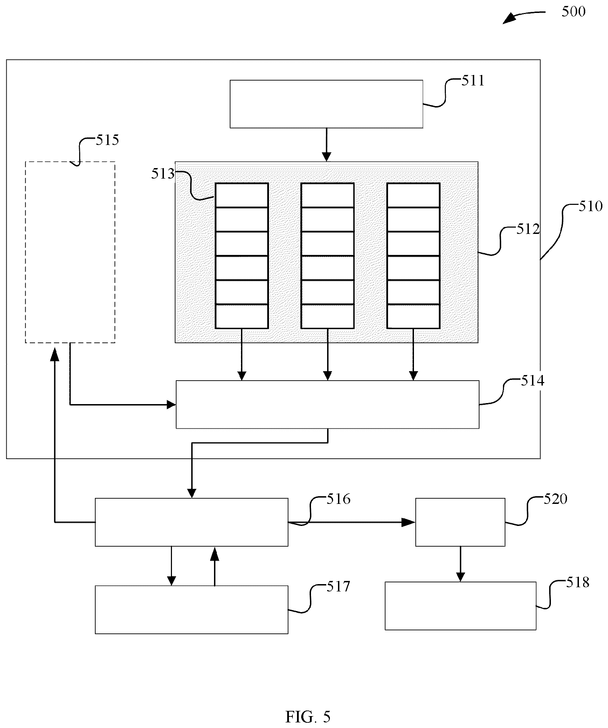

FIG.5 illustrates a diagram of an exemplary internal structure of an instruction control system implementing an instruction control solution according to some embodiments of the present disclosure.

As shown, the instruction control system 500 includes an instruction control apparatus 510 and a data cache 520.

Specifically, the instruction control apparatus 510 includes an instruction decoder 511, configured to decode a memory access instruction. The memory access instruction is configured to read data from the source end storage circuit and write the data into the destination end storage circuit. The instruction control apparatus 510 further includes an instruction cache unit 512, which is configured to cache a decoded memory access instruction; and an instruction transmission controller 513, configured to, in response to existence of only dependency on the destination end storage circuit between the memory access instruction and a preceding instruction, transmit in advance the memory access instruction in the instruction caching unit 512 to read the data from the source end storage circuit and cache the data in the data cache 520, and send a blocking signal which blocks the data read by the memory access instruction to the data cache 520.

The memory access instruction may include, but is not limited to, an instruction such as Load, Store, Move and the like. The Load instruction is used to load data from an off-chip memory to an on-chip memory. The Store instruction is used to store result data computed by operation circuit back to the off-chip memory. The Move instruction is used to transfer data between the on-chip memories. The off-chip memory may include, for example, but not limited to, the DRAM in FIG. 2 and an external Scratchpad Memory (not shown). The on-chip memory may include, for example, but not limited to, the NRAM and WRAM in FIG. 3, the static random access memory (SRAM) in FIG. 4, a register file Regfile in another hardware system architecture and so on.

The instruction cache unit 512 is configured to cache a decoded memory access instruction to be transmitted and executed. Specifically, the instruction cache unit 512 is responsible for caching the memory access instruction, after receiving the memory access instruction from an upstream unit (for example, the instruction decoder 511).

When executing sequences of instructions in a single processing core, instructions are typically separately cached to different instruction queues by type to be transmitted. The instructions inside each instruction queue are transmitted sequentially, and are executed sequentially. The instructions in a plurality of instruction queues may be transmitted in parallel, and therefore the instructions are transmitted out of order as a whole.

Thus, in some implementations, instruction cache unit 512 may include a number of instruction cache queues 513 for separately caching different types of memory access instructions. Dependency relationship between instructions in different instruction cache queues may be maintained by a synchronization instruction. The memory access instructions in a same instruction cache queue are transmitted in order.

For example, in an LCS pipeline that uses software ping-pong to implement data loading (L), computation (C), and storage back (S), the storage space can usually be configured with at least two buffers to support data access between one buffer and an external storage circuit while simultaneously supporting data access between another buffer and a processing circuit. These two buffers may be referred to as ping buffer space and pong buffer space, also known as ping pong pipeline. Specifically, when the processing circuit performs computation on the data stored in the ping storage space of the storage circuit, the storage circuit loads the next computation data onto its ping storage space. It can be seen from the foregoing hardware architecture description that a memory access interface between a storage circuit and another storage circuit is different from a memory access interface between a storage circuit and a processing circuit, and therefore, the foregoing parallel manner can be supported, thereby forming pipeline processing. In such a ping pong pipeline scenario, the instruction cache queue may include, for example, an io0 queue (for ping cache space) and an io1 queue (for pong cache space).

In other implementations, instruction cache queue 513 may be divided according to the resources and manner to be accessed. For example, three instruction cache queues are provided, one for a memory access instruction that does not access an off-chip memory (e. g., DRAM) (such as a Move stream, a Move instruction that performs data transfer between on-chip memories), one for a memory access instruction that reads an off-chip memory (such as an io0 stream, a Load instruction), and one for a memory access instruction that writes an off-chip memory (such as an io1 stream, a Store instruction).

An instruction transmission controller 514 is responsible for monitoring an exit of the instruction cache unit 512, releasing or blocking the exit according to a control condition, and sending a corresponding blocking signal and releasing signal to the data cache 520. The information required for the instruction transmission controller 514 to make control judgments, such as the dependency relationship information on the storage circuit, may be maintained through specialized components. As shown in the figure, in some implementations, the instruction control apparatus 500 may further include a dependency recording unit 515, configured to record dependency relationship on a storage resource of a memory access instruction. The instruction transmission controller 514 may determine whether dependency on the source end storage circuit and/or destination end storage circuit exists between the memory access instruction and the preceding instruction according to the dependency relationship record of the dependency recording unit 515.

Storage resources for memory access instructions may include, for example, various on-chip and/or off-chip storage circuits such as DRAM in FIG. 2, external Scratchpad Memory (not shown), NRAM and WRAM in FIG. 3, SRAM in FIG. 4, register files Regfiles in other hardware system architectures and so on.

In some embodiments, the dependency recording unit 515 may be further configured to: in response to a memory access instruction being transmitted to a downstream resource, mark the corresponding resource as a busy state (BUSY); and/or in response to the corresponding resources being used up, mark the resources as idle state (IDLE). For example, when a memory access instruction for accessing the DRAM is transmitted, the DRAM may be marked as BUSY. Therefore, the dependency recording unit 515 may update the resource state in time, so that the instruction transmission controller is configured to determine whether the instruction may be transmitted.

Specifically, the instruction transmission controller 514 may be configured to determine, according to the information of the dependency recording unit 515, that the dependency on the source end storage circuit of the current memory access instruction at the exit of the instruction cache unit 512 is released, and that only the dependency on the destination end storage circuit exists between the current memory access instruction and the preceding instruction. At this time, since there is no dependence on the source storage circuit, the read operation of the current memory access instruction may be executed in advance.

When executing the read operation of the current memory access instruction in advance, the instruction transmission controller 514 may transmit the current memory access instruction at the exit of the instruction cache unit 512 to downstream execution units, such as the data memory access unit 516. Meanwhile, the instruction transmission controller 514 also sends a blocking signal to the data cache 520 to block the data read by the memory access instruction.

The data memory access unit 516 reads the corresponding data from the source end storage circuit 517 according to the access instruction, and then caches the read data in the data cache 520.

At this point, the data cache 520 has received a blocking signal sent by the instruction transmission controller 514 indicating to block the data read by the memory access instruction. The blocking signal may include the memory access instruction ID that needs to be blocked. Therefore, according to the instruction of the blocking signal, the data cache 520 may not return the return data of the memory access instruction ID to the destination end storage circuit 518, but block the return data inside the data cache 520.

When the dependence on the destination end storage circuit is released, the write operation of the memory access instruction can continue to be executed. At this point, the instruction transmission controller 514 may be configured to send a release signal to the data cache 520 to release the data read by the memory access instruction when it is determined that the dependency on the destination end storage circuit has been released based on the dependency relationship record of the dependency recording unit 515.

When the execution of the instruction is completed, the execution unit (for example, the data memory access unit 516) notifies the instruction decoder 511 that the execution of the instruction is completed, and states of related resources (including execution resource and storage resource) are updated correspondingly. For example, the state of the resource may be recorded and updated in the dependency recording unit 515. Then, when determining the control condition, the instruction transmission controller 514 may determine whether the dependency on the source end/destination end storage circuit exists according to the information in the dependency recording unit 518.

After receiving the release signal sent from the instruction transmission controller 514 indicating to release the data read by the memory access instruction, the data cache 520 can clear the corresponding blocking record based on the memory access instruction ID and allow the return data of the memory access instruction ID to be returned to the destination end storage circuit 518, thereby completing the write operation of the memory access instruction.

In some embodiments, the data cache 520 may be a reorder cache ROB used in instruction pipelines. Considering the capacity limitation of ROB, it is possible to limit the number of prefetches extracted in the instruction control solution for embodiments of the present disclosure in ROB. For example, when processing requests from the same processing core, the appearance of allocated blocking states cannot exceed 1/4 of the total ROB.

In some embodiments, in response to the amount of data blocked in the data cache exceeding a predetermined threshold, the data cache 520 sends a signal to the instruction control apparatus 500 (e. g., instruction decoder 511) indicating that the data cache space is insufficient to suspend decoding of subsequent instructions. At this point, in response to receiving the signal indicating that the data cache space is insufficient, the instruction decoder 511 suspends decoding of subsequent instructions.

In some embodiments, since the prefetched data may occupy more space of the data cache when the read data is prefetched, so the prefetching function of the read data described above may be selectively enabled on the processor. For example, the prefetching function of the read data may be enabled where the processing core and the storage core do not simultaneously load data from the off-chip memory DRAM. For another example, on a fixed pipeline solution that has been compared and tested, when it is determined that the amount of prefetched data is not large, the prefetching function of the read data may be enabled.

The instruction control solution disclosed in this embodiment may support early startup of dependency within the instruction streams. For example, if the current memory access instruction is the Load instruction, the first data needs to be read from the off-chip memory and written to the on-chip memory, such as NRAM. The Load instruction depends on the previous Store instruction in the instruction stream. The Store instruction requires the second data to be stored back from on-chip memory (such as NRAM) to off-chip memory. The two instructions have dependency relationship in the on-chip memory, for example, after the dependency recording unit 515 issues the Store instruction, the on-chip memory NRAM is marked as busy. At this time, the instruction transmission controller 514 determines that the Load instruction can be issued in advance according to the dependency relationship of the dependency recording unit 515 without waiting for the execution of the Store instruction to be completed. When the Load instruction is issued, the instruction transmission controller 514 sends, to the data cache 520, a blocking signal for blocking data returned by the Load instruction. After the Store instruction completes the read operation on the on-chip memory, the dependency on the Store instruction may be immediately released. At this point, the instruction transmission controller 514 sends a release signal to the data cache 520 to release the data returned by the load instruction.

The instruction control solution disclosed in this embodiment may support early startup of dependencies between the instruction streams. As mentioned earlier, the dependency relationship between different instruction queues needs to be ensured through synchronization instructions. Similarly, when executing instruction sequences in multiple processing cores, the dependency relationship between instruction streams on different processing cores also need to be ensured through synchronization instructions.

A classic problem in terms of data synchronization is producer-consumer problems, where a producer and consumer share the same storage space in the same time period, the producer generates data into the space, and the consumer takes the data away. In an instruction stream synchronization event, similar to a data synchronization event, a producer-consumer model may also be introduced, but it does not involve data transmission, but the execution of instructions. Specifically, a production end of the instruction stream synchronization event needs to execute some instructions first, and a consumption end of the instruction stream synchronization event cannot execute subsequent instructions until those instructions have been executed by the production end.

The synchronization instruction carries the identifiers of the production end and the consumption end. When the synchronization instruction is to be executed, it is necessary to wait for the execution of the previous instruction at the production end indicated by the synchronization instruction to be completed before releasing the subsequent instruction at the consumption end. Specifically, in hardware synchronization within a single processing core, each instruction stream has an instruction queue, a synchronization instruction (for example, a Sync instruction) will be issued to all related instruction queues, and then a unified synchronization table (Sync Table) module at a control unit processes the synchronization instruction. The Sync Table module may be included in the instruction decoding unit IDU. When each instruction queue encounters the Sync.Producer instruction of the current stream, it will wait for the preceding instruction to be submitted and then send a signal Ready to the Sync Table without blocking the execution of subsequent instructions. When each instruction queue encounters the Sync.Consumer instruction of the current stream, the execution of subsequent instructions is blocked until a transmission signal Go is received from the Sync Table. After the Sync Table receives the signals Ready from all production ends, it sends the signal Go to the corresponding consumption end.

In this disclosed embodiment, during the release process of synchronization, a production end may be released separately according to the storage range accessible by each consumption instruction stream in the synchronization instruction. The storage ranges may be distinguished by memory type, for example. By releasing the storage ranges separately, dependency on the source end storage circuit and dependency on the destination end storage circuit can be determined separately, so that when the dependency on the source end storage circuit is removed, a read operation of the memory access instruction can be executed in advance.

For example, when a processor core IPC and a storage core SMC are synchronized through a synchronization instruction (for example, a Local Barrier), if an IO stream of the IPC is used as a production end to send a signal Ready, in other words, data in the DRAM is ready, a signal DRAM Go may be sent to a memory access module MAU of the SMC at this time, in other words, the dependence on the DRAM has been released.

For another example, if the current memory access instruction is a Load instruction, a first data needs to be read from an off-chip memory (for example, DRAM) and written it into an on-chip memory, for example, NVRAM. The load instruction is preceded by an IO as a synchronization instruction for the consumption end (for example, a Sync instruction within a single processing core, or a Local Barrier instruction between multiple processing cores). Then, when receiving the synchronization release signal for the DRAM (in other words, the source end storage circuit corresponding to the Load instruction), the Load instruction may be issued in advance, and a blocking signal for blocking return data of the instruction can be sent to the data cache. After receiving a complete dependency release signal, in other words, when the dependency on the destination end storage circuit has been removed, the dependency on the synchronization instruction may be released immediately, and a release signal for releasing the return data of the instruction is sent to the data cache.

In conclusion, when the data dependency of the current memory access instruction operation is only on the write access to the destination storage circuit, data can be read from the source end storage circuit without being written, and then written after completion of the preceding instruction access, thereby hiding the access delay of the current memory access instruction and improving processing efficiency.

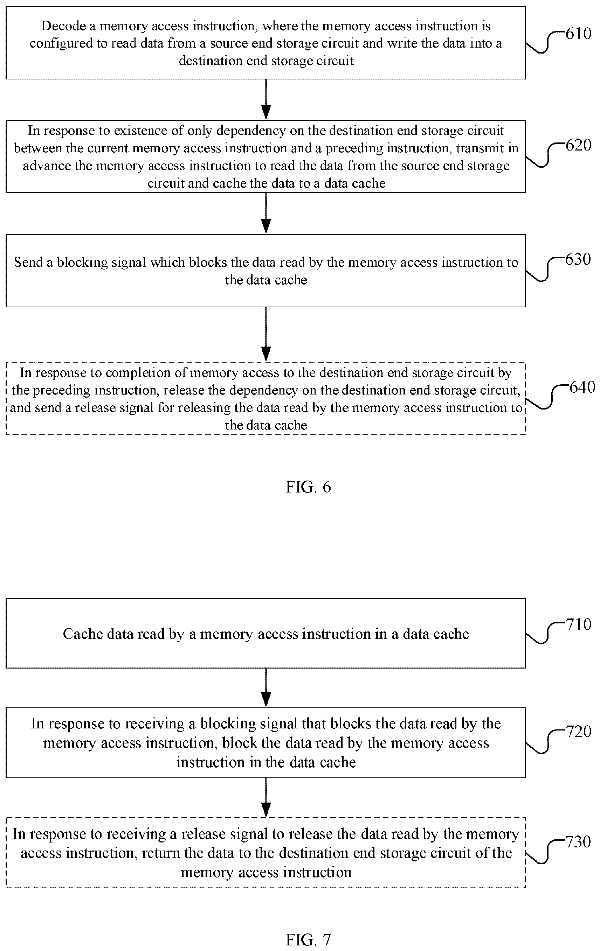

FIG. 6 illustrates an exemplary flowchart of an instruction control method according to an embodiment of the present disclosure. The instruction control method 600 may be implemented by the instruction control apparatus 510 of FIG. 5.

As shown, in step 610, a memory access instruction is decoded, where the memory access instruction is configured to read data from a source end storage circuit and write the data into a destination end storage circuit. This step may be executed by, for example, the instruction decoder 511 of FIG. 5.

Next, in step 620, in response to existence of only dependency on the destination end storage circuit between the current memory access instruction and a preceding instruction, the current memory access instruction is transmitted in advance to read the data from the source end storage circuit and cache the data in the data cache. Meanwhile, in step 630, a blocking signal for blocking data read by the memory access instruction is sent to the data cache. Steps 620 and 630 may be performed, for example, by the instruction transmission controller 514 of FIG. 5. Specifically, the instruction transmission controller 514 may determine whether only dependency on a destination end storage circuit exists between the current memory access instruction and the preceding instruction by querying the dependency relationship record of the dependency recording unit 515.

Specifically, in response to existence of only the dependency on the destination end storage circuit between the current memory access instruction and the preceding instruction may include receiving a dependency release signal for the source end storage circuit. In this case, the dependency recording unit 515 may update the dependency relationship of the source end storage circuit in response to receiving the dependency release signal for the source end storage circuit. The dependency release signal may be a synchronization release signal for the source end storage circuit, and the synchronization release signal is based on the storage range accessible by the instruction stream of each consumption end in the synchronization instruction, and is released separately for the production end according to the storage range.

Alternatively or additionally, in step 640, in response to completion of memory access to the destination end storage circuit by the preceding instruction, the dependency on the destination end storage circuit is released. And a release signal for releasing the data read by the memory access instruction is sent to the data cache.

Specifically, the dependency recording unit 515 may update the dependency relationship of the destination end storage circuit in response to receiving the dependency release signal for the destination end storage circuit. Thus, the instruction transmission controller 514 may determine whether the dependency on the destination end storage circuit has been released by querying the dependency recording unit 515 and then send a release signal to the data cache.

FIG. 7 illustrates another exemplary flowchart of an instruction control method according to an embodiment of the present disclosure. The instruction control method 700 may be implemented at the data cache 520 of FIG. 5.

As shown, in step 710, data read by a memory access instruction is cached in a data cache. Next, in step 720, in response to receiving a blocking signal that blocks the data read by the memory access instruction, the data read by the memory access instruction is blocked in the data cache.

Alternatively or additionally, in step 730, in response to receiving a release signal to release the data read by the memory access instruction, the data is returned to the destination end storage circuit of the memory access instruction.

In some embodiments, alternatively or additionally, in response to an amount of the data blocked in the data cache exceeding a predetermined threshold, a signal indicating that the data cache space is insufficient is sent to suspend decoding of subsequent instructions.

Those skilled in the art may understand that various features of the instruction control system described in the foregoing with reference to FIG. 5 may be similarly applied to the instruction control methods in FIGS. 6 and 7, and therefore, are not repeated herein.

The instruction control methods described above may be executed within a single core processor or a single processor core, and may also be executed between multiple core processors or multiple processor cores, and embodiments of the present disclosure are not limited in this respect. The foregoing instruction control method may be implemented completely by hardware (for example, the hardware described in the foregoing with reference to FIG. 5), and may also be implemented in the form of a combined software system.

Those skilled in the art may understand that the foregoing solutions may be applied to an artificial intelligence processor, and may also be applied to a general-purpose or special-purpose processor such as a CPU or a GPU. Embodiments of the present disclosure are not limited in this respect. This solution is applicable to both a single instruction stream system and a multi-instruction stream system.

Embodiments of the present disclosure also provide a processor, including the foregoing instruction control device and/or data cache for implementing an instruction control method. Embodiments of the present disclosure further provide a chip, which may include the processor of any one of the embodiments described above with reference to the accompanying drawings. Further, the present disclosure also provides a board card, which may include the aforementioned chip.

According to different application scenarios, the electronic device or apparatus of the present disclosure may include a server, a cloud server, a server computing cluster, a data processing apparatus, a robot, a computer, a printer, a scanner, a tablet computer, a smart terminal, a PC device, an Internet of Things terminal, a mobile terminal, a cell phone, a tachograph, a navigator, a sensor, camera, video camera, camcorder, a projector, a watch, headphones, a mobile storage, a wearable device, a visual terminal, an automatic driving terminal, a vehicle, a household appliance, and/or a medical device. The vehicle comprises an aircraft, a ship and/or a vehicle; the household appliance comprises a television, an air conditioner, a microwave oven, a refrigerator, an electric cooker, a humidifier, a washing machine, an electric lamp, a gas stove and a cooking machine; the medical device comprises a nuclear magnetic resonance meter, a B-Supervisometer and/or an electrocardiograph. The electronic devices or apparatuses of the present disclosure may also be applied to the fields of the Internet, Internet of Things, data centers, energy sources, traffic, public management, manufacturing, education, grids, telecommunications, finance, retail, worksites, healthcare, and the like. Further, the electronic device or apparatus of the present disclosure may also be applied to application scenarios related to artificial intelligence, big data, and/or cloud computing such as a cloud, an edge, a terminal and so on. In one or more embodiments, the electronic device or apparatus with high computing power according to the solutions of the present disclosure may be applied to a cloud device (for example, a cloud server), and the electronic device or apparatus with low power consumption may be applied to a terminal device and/or an edge device (for example, a smart phone or a camera). In one or more embodiments, hardware information about a cloud device and hardware information about a terminal device and/or an edge device are compatible with each other, so that appropriate hardware resources can be matched from hardware resources of the cloud device according to the hardware information about the terminal device and/or the edge device to simulate hardware resources of the terminal device and/or the edge device, to achieve unified management, scheduling, and collaborative work of terminal-cloud integration or cloud-edge-terminal integration.

It should be noted that, for the purpose of conciseness, the present disclosure describes some methods and embodiments thereof as a series of actions and combinations thereof, but those skilled in the art may understand that the solutions of the present disclosure are not limited by the order of the described actions. Thus, in light of the disclosure or teachings of the present disclosure, those skilled in the art will appreciate that certain steps therein may be performed in other sequences or simultaneously. Further, those skilled in the art can appreciate that the embodiments described in this disclosure can be viewed as being optional, in other words, acts or modules involved therein are not necessarily required for implementation of certain one or more of the schemes of this disclosure. In addition, depending on the different schemes, the present disclosure also has different emphases on the description of some embodiments. In view of this, those skilled in the art can understand the parts not described in detail in one embodiment of this disclosure can also be referred to in the relevant descriptions of other embodiments.

In terms of specific implementation, based on the disclosure and teachings of the present disclosure, those skilled in the art may understand that several embodiments disclosed in the present disclosure may also be implemented in other manners not disclosed herein. For example, for units in the aforementioned electronic device or apparatus embodiment, the present disclosure splits the units on the basis of considering logical functions, but there may be other splitting methods during actual implementations. For another example, a plurality of units or components may be combined or integrated into another system, or some features or functions within a unit or component can be selectively disabled. In terms of connection relationships between different units or components, the connections discussed above in connection with the figures may be direct or indirect couplings between the units or components. In some scenarios, the aforementioned direct or indirect coupling involves a communication connection utilizing an interface, where the interface may support electrical, optical, acoustical, magnetic, or other forms of signal transmission.

In the present disclosure, the units described as separate components may or may not be physically separate, and the components shown as units may or may not be physical units. The aforementioned components or units can be located in the same location or distributed across a plurality of network units. In addition, according to actual needs, some or all of the units can be selected to achieve the purpose of the solution described in this disclosed embodiment. Additionally, in some scenarios, a plurality of units in an embodiment of the present disclosure may be integrated into one unit or physically exist separately for each unit.

In other scenarios, the integrated unit may also be implemented in a form of hardware, in other words, a specific hardware circuit, which may include a digital circuit and/or an analog circuit. The physical implementation of the hardware structure of a circuit can include but is not limited to physical devices, which can include but are not limited to transistors or memristors and so on In view of this, various devices described herein (such as computing devices or other processing devices) can be implemented through appropriate hardware processors, such as central processing units, GPUs, FPGAs, DSPs, ASIC and so on. Furthermore, the aforementioned storage unit or storage device may be any appropriate storage medium (including magnetic storage medium or magneto-optical storage medium, etc.), which may be, for example, a resistive random access memory (RRAM), a dynamic random access memory (DRAM), a static random access memory (SRAM), an enhanced dynamic random access memory (EDRAM), a high bandwidth memory (HBM), a hybrid memory cube (HMC), an ROM, an RAM and so on.

The foregoing can be better understood according to the following articles:
Article 1. An instruction control apparatus, including: an instruction decoder configured to decode a memory access instruction, where the memory access instruction is configured to read data from a source end storage circuit and write the data into a destination end storage circuit; an instruction cache unit configured to cache the decoded memory access instruction; and an instruction transmission controller configured to transmit in advance the memory access instruction in the instruction cache unit to read the data from the source end storage circuit and cache the data to a data cache in response to existence of only dependency on the destination end storage circuit between the memory access instruction and a preceding instruction, and send a blocking signal which blocks the data read by the memory access instruction to the data cache.
Article 2. The instruction control apparatus of article 1, further including a dependency recording unit configured to record dependency relationship of a storage resource of a memory access instruction; and the instruction transmission controller further configured to: send a release signal for releasing the data read by the memory access instruction to the data cache when it is determined that the dependency on the destination end storage circuit has been released based on the dependency relationship record of the dependency recording unit.
Article 3. The instruction control apparatus of article 2, where the instruction transmission controller is further configured to determine whether only dependency on the destination end storage circuit exists between the memory access instruction and the preceding instruction based on the dependency relationship record of the dependency recording unit.
Article 4. The instruction control apparatus of article 3, where the dependency recording unit is further configured to update the dependency relationship of the source end storage circuit in response to receiving a dependency release signal for the source end storage circuit, where the dependency release signal is a synchronization release signal for the source end storage circuit, and the synchronization release signal is based on storage range accessible by an instruction stream of each consumption end in the synchronization instruction, and is released separately for a production end according to the storage range.
Article 5. The instruction control apparatus of any one of articles 1-4, where the instruction decoder is further configured to suspend decoding of subsequent instructions in response to receiving a signal indicating that the data cache space is insufficient.
Article 6. The instruction control apparatus of any one of articles 1-5, where the preceding instruction and the memory access instruction are in the same instruction queue or in different instruction queue.
Article 7. The instruction control apparatus of any one of articles 1-6, where the data cache is a reordering cache.
Article 8. A data cache configured to: cache data read by a memory access instruction; and in response to receiving a blocking signal to block the data read by the memory access instruction, block the data read by the memory access instruction in the data cache.
Article 9. The data cache of article 8, further configured to: in response to receiving a release signal to release the data read by the memory access instruction, return the data to the destination end storage circuit of the memory access instruction.
Article 10. The data cache of any one of articles 8-9, further configured to: in response to the amount of data blocked in the data cache exceeding a predetermined threshold, send a signal indicating that the data cache space is insufficient to an instruction decoder to suspend decoding of subsequent instructions.
Article 11. The data cache of any one of articles 8-10, where the data cache is a reordering cache.
Article 12. A processor, including the instruction control apparatus according to any one of articles 1-7 and/or the data cache according to any one of articles 8-11.
Article 13. A chip, including the processor of Article 12.
Article 14. A board card, including the chip of Article 13.
Article 15. A memory access instruction control method including: decoding a memory access instruction, where the memory access instruction is configured to read data from a source end storage circuit and write the data into a destination end storage circuit; in response to existence of only dependency on the destination end storage circuit between the memory access instruction and a preceding instruction, transmitting in advance the memory access instruction to read the data from the source end storage circuit and cache the data to a data cache; and sending a blocking signal which blocks the data read by the memory access instruction to the data cache.
Article 16. The method of article 15, further including: in response to completion of memory access to the destination end storage circuit by the preceding instruction, releasing the dependency on the destination end storage circuit; and sending a release signal for releasing the data read by the memory access instruction to the data cache.
Article 17. The method of article 15 or 16, where in response to existence of only dependency on the destination end storage circuit between the memory access instruction and the preceding instruction including: receiving a dependency release signal for the source end storage circuit.
Article 18. The method of article 17, where the dependency release signal for the source end storage circuit is a synchronization release signal for the source end storage circuit, and the synchronization release signal is based on the storage range accessible by an instruction stream of each consumption end in the synchronization instruction, and is released separately for a production end according to the storage range.
Article 19. The method of any one of articles 15-18, further including: suspending decoding of subsequent instructions in response to receiving a signal indicating that the data cache space is insufficient.
Article 20. The method of any one of articles 15-19, where the preceding instruction and the memory access instruction are in the same instruction queue or in different instruction queue.
Article 21. The method of any one of articles 15-20, where the data cache is a reordering cache.
Article 22. A data caching method, including: caching, in a data cache, data read by a memory access instruction; and in response to receiving a blocking signal to block the data read by the memory access instruction, blocking the data read by the memory access instruction in the data cache.
Article 23. The method of article 22, further including: in response to receiving a release signal to release the data read by the memory access instruction, returning the data to the destination end storage circuit of the memory access instruction.
Article 24. The method of any one of articles 22-23, further including: in response to the amount of data blocked in the data cache exceeding a predetermined threshold, sending a signal indicating that the data cache space is insufficient to suspend decoding of subsequent instructions.

The examples of the present disclosure have been described in detail above. Specific examples have been used in the specification to explain the principles and implementation manners of the present disclosure. The descriptions of the above examples are only used to facilitate understanding of the methods and core ideas of the present disclosure. Persons of ordinary skill in the art may change the implementation and application scope according to the ideas of the present application. In summary, the content of this specification should not be construed as a limitation on the present disclosure.

## Claims

1. An instruction control apparatus, comprising:
an instruction decoder configured to decode a memory access instruction, wherein the memory access instruction is configured to read data from a source end storage circuit and write the data into a destination end storage circuit;
an instruction cache unit configured to cache the decoded memory access instruction; and
an instruction transmission controller configured to transmit in advance the memory access instruction in the instruction cache unit to read the data from the source end storage circuit and cache the data to a data cache in response to existence of only dependency on the destination end storage circuit between the memory access instruction and a preceding instruction, and send a blocking signal which blocks the data read by the memory access instruction to the data cache.

2. The instruction control apparatus of claim 1, further comprising:
a dependency recording unit configured to record dependency relationship of a storage resource of a memory access instruction; and
the instruction transmission controller further configured to send a release signal for releasing the data read by the memory access instruction to the data cache when it is determined that the dependency on the destination end storage circuit has been released based on the dependency relationship record of the dependency recording unit.

3. The instruction control apparatus of claim 2, wherein the instruction transmission controller is further configured to determine whether only dependency on a destination end storage circuit exists between the memory access instruction and the preceding instruction based on the dependency relationship record of the dependency recording unit.

4. The instruction control apparatus of claim 3, wherein the dependency recording unit is further configured to update the dependency relationship of the source end storage circuit in response to receiving a dependency release signal for the source end storage circuit, wherein the dependency release signal is a synchronization release signal for the source end storage circuit, and the synchronization release signal is based on storage range accessible by an instruction stream of each consumption end in the synchronization instruction, and is released separately for a production end according to the storage range.

5. The instruction control apparatus of any one of claims 1- 4, wherein the instruction decoder is further configured to:
suspend decoding of subsequent instructions in response to receiving a signal indicating that the data cache space is insufficient.

6. The instruction control apparatus of any one of claims 1-5, wherein the preceding instruction and the memory access instruction are in the same instruction queue or in different instruction queue.

7. The instruction control apparatus of any one of claims 1-6, wherein the data cache is a reordering cache.

8. A data cache configured to:
cache data read by a memory access instruction; and
in response to receiving a blocking signal to block the data read by the memory access instruction, block the data read by the memory access instruction in the data cache.

9. The data cache of claim 8, further configured to:
in response to receiving a release signal to release the data read by the memory access instruction, return the data to the destination end storage circuit of the memory access instruction.

10. The data cache of any one of claims 8-9, further configured to:
in response to the amount of data blocked in the data cache exceeding a predetermined threshold, send a signal indicating that the data cache space is insufficient to an instruction decoder to suspend decoding of subsequent instructions.

11. The data cache of any one of claims 8-10, wherein the data cache is a reordering cache.

12. A processor, comprising the instruction control apparatus according to any one of claims 1-7 and/or the data cache according to any one of claims 8-11.

13. A chip, comprising the processor of claim 12.

14. A board card, comprising the chip of claim 13.

15. A memory access instruction control method, comprising:
decoding a memory access instruction, wherein the memory access instruction is configured to read data from a source end storage circuit and write the data into a destination end storage circuit;
in response to existence of only dependency on the destination end storage circuit between the memory access instruction and a preceding instruction, transmitting in advance the memory access instruction to read the data from the source end storage circuit and cache the data to a data cache; and
sending a blocking signal which blocks the data read by the memory access instruction to the data cache.

16. The method of claim 15, further comprising:
in response to completion of memory access to the destination end storage circuit by the preceding instruction, releasing the dependency on the destination end storage circuit; and
sending a release signal for releasing the data read by the memory access instruction to the data cache.

17. The method of claim 15 or 16, wherein in response to existence of only the dependency on the destination end storage circuit between the memory access instruction and the preceding instruction comprising:
receiving a dependency release signal for the source end storage circuit.

18. The method of claim 17, wherein the dependency release signal for the source end storage circuit is a synchronization release signal for the source end storage circuit, and the synchronization release signal is based on storage range accessible by an instruction stream of each consumption end in the synchronization instruction, and is released separately for a production end according to the storage range.

19. The method of any one of claim 15-18, further comprising:
suspending decoding of subsequent instructions in response to receiving a signal indicating that the data cache space is insufficient.

20. The method of any one of claims 15-19, wherein the preceding instruction and the memory access instruction are in the same instruction queue or in different instruction queue.

21. The method of any one of claims 15-20, wherein the data cache is a reordering cache.

22. A data caching method, comprising:
caching, in a data cache, data read by a memory access instruction; and
in response to receiving a blocking signal to block the data read by the memory access instruction, blocking the data read by the memory access instruction in the data cache.

23. The method of claim 22, further comprising:
in response to receiving a release signal to release the data read by the memory access instruction, returning the data to the destination end storage circuit of the memory access instruction.

24. The method of any one of claims 22-23, further comprising:
in response to the amount of data blocked in the data cache exceeding a predetermined threshold, sending a signal indicating that the data cache space is insufficient to suspend decoding of subsequent instructions.
